# FASCICULE DE BREVET EUROPEEN

(11) **EP 1 561 991 B1**
(45) Date de publication et mention de la délivrance du brevet: **18.04.2007**
(21) Numéro de dépôt: 05356017.3
(22) Date de dépôt: 26.01.2005
(51) Int. Cl.: F16L 37/42

(54) **Elément femelle de raccord, raccord rapide et installation de remplissage comprenant un tel élément femelle**
Schnellkupplungsmuffe und Schnellkupplung mit solcher Schnellkupplungsmuffe
Quick-acting female coupling and coupling comprising such quick-acting female coupling

(30) Priorité: 27.01.2004 FR 0400753
(43) Date de publication de la demande: 10.08.2005
(73) Titulaire: STÄUBLI FAVERGES, 74210 Faverges (FR)
(72) Inventeur: Tiberghien, Alain-Christophe, 74320 Sevrier (FR); Chambaud, Antoine, 74210 Giez (FR)
(74) Mandataire: Myon, Gérard Jean-Pierre

(56) Documents cités:
- GB-A- 732 186
- GB-A- 1 554 660
- US-A- 5 967 491
- US-A1- 2003 085 572

## Description

L'invention a trait à un élément femelle de raccord rapide. L'invention a également trait à un raccord rapide pour la jonction amovible de canalisations de fluide sous pression ainsi qu'à une installation de remplissage de réservoirs de véhicules automobiles en gaz sous pression incorporant un tel élément femelle.

Dans le domaine du remplissage de réservoir de véhicules automobiles en gaz sous pression, notamment en gaz de pétrole liquéfié (GPL), il est connu que chaque véhicule automobile peut être équipé d'un embout mâle constituant l'extrémité d'une canalisation reliée à un réservoir, cet embout étant destiné à coopérer avec un élément femelle appartenant à une installation de remplissage, telle qu'une station service. Cet embout mâle et cet élément femelle forment ensemble un raccord rapide destiné à être manipulé par un utilisateur, tel que le chauffeur d'un véhicule automobile.

Normalement, l'embout mâle du véhicule automobile est équipé d'un joint torique qui assure l'isolement entre le canal de circulation de gaz sous pression, formé par les éléments de raccord accouplés, et l'atmosphère ambiante. Or, il arrive que le joint torique qui devrait être présent sur l'embout d'un véhicule automobile en soit absent pour cause d'usure, de coupure ou suite à une éjection accidentelle. Le remplissage d'un véhicule dont l'embout mâle est dépourvu de joint est potentiellement dangereux, notamment du fait du caractère explosible de certains gaz.

Des problèmes analogues se posent dans d'autres domaines où un joint d'étanchéité est utilisé sur un élément mâle de raccord.

US-A-5,967,491 enseigne de munir un embout mâle d'un joint intérieur. En cas d'absence du joint, le clapet de l'élément femelle peut être actionné à l'ouverture, avec un risque de fuite.

C'est à ces inconvénients qu'entend plus particulièrement remédier l'invention en éliminant, autant que faire se peut, le risque de transit de fluide à travers les éléments mâle et femelle de raccords en l'absence d'un joint qui doit normalement équiper l'élément mâle.

Dans cet esprit, l'invention concerne un raccord rapide pour la jonction amovible de deux canalisations parcourues par un fluide de sous pression, ce raccord comprenant deux éléments mâle et femelle aptes à s'emmancher axialement l'un dans l'autre, l'élément mâle étant équipé d'un joint disposé dans un logement ménagé dans une surface interne du corps de cet élément, alors que l'élément femelle est pourvu d'un clapet d'obturation, caractérisé en ce que le clapet est commandé à l'ouverture par un effort de réaction exercé par le joint de l'élément mâle, cet effort résultant de l'appui du clapet sur le joint suite à l'emmanchement des éléments mâle et femelle.

Grâce à l'invention, l'élément femelle n'est ouvert, par déplacement de son clapet, que suite à l'interaction de celui-ci avec le joint d'un élément mâle. De façon avantageuse, en l'absence du joint dans le logement de l'élément mâle, l'emmanchement des éléments mâle et femelle n'induit pas le déplacement du clapet dans un sens d'ouverture.

L'invention concerne également un élément femelle de raccord rapide qui appartient à un tel raccord ainsi qu'un élément femelle de raccord rapide pourvu d'un clapet d'obturation caractérisé en ce que ce clapet est commandé à l'ouverture par un effort de réaction exercé par un joint disposé dans un logement interne du corps d'un élément mâle de raccord apte à être emmanché dans l'élément femelle, cet effort résultant de l'appui sur le joint d'un chanfrein périphérique et externe ou d'une zone de transition entre la face avant et une surface radiale du clapet, suite à l'emmanchement de ces éléments mâle et femelle.

Selon des aspects avantageux mais non obligatoires, un élément femelle de raccord peut incorporer une ou plusieurs des caractéristiques suivantes : Le clapet est pourvu d'une partie apte à être engagée dans le volume intérieur du corps d'un élément mâle de raccord et à venir en appui contre le joint de cet élément mâle lors de l'emmanchement des éléments mâle et femelle. Selon les modes de réalisation considérés, cette partie peut être monobloc avec ou rapportée sur une partie principale du clapet apte à obturer un conduit interne de l'élément femelle. En outre, la partie apte à être engagée dans le volume intérieur du corps d'un élément mâle du raccord est avantageusement pourvue d'un chanfrein périphérique externe d'appui contre un joint, ce chanfrein étant convergeant en direction opposée à une zone d'appui étanche du clapet sur le corps de l'élément femelle. L'angle au sommet de ce chanfrein peut avoir une valeur comprise entre 60 et 175°, de préférence entre 80 et 160°, de préférence encore de l'ordre de 120°. En variante, à la place du chanfrein, la partie précitée peut être conformée en portion de tore.

L'invention concerne enfin une installation de remplissage de réservoirs de véhicules automobiles en gaz sous pression équipés chacun d'un élément de raccord mâle pourvu d'un joint disposé dans un logement ménagé sur une surface interne d'un corps de cet élément mâle, cette installation étant elle-même équipée d'un élément de raccord femelle apte à recevoir en emmanchement l'un des éléments de raccord mâle précités et pourvu d'un clapet d'obturation. Cette installation est caractérisée en ce que l'élément femelle est comme décrit ci-dessus.

L'invention sera mieux comprise et d'autres avantages de celle-ci apparaîtront plus clairement à la lumière de la description qui va suivre de deux modes de réalisation d'un élément femelle, d'un raccord et d'une partie d'une installation conformes à son principe, donnée uniquement à titre d'exemple et faite en référence aux dessins annexés dans lesquels :
- la figure 1 est une coupe axiale d'un élément mâle et d'un élément femelle de raccord conforme à l'invention, en configuration découplée ;
- la figure 2 est une coupe analogue à la figure 1, en configuration accouplée du raccord et lorsque l'élément mâle est équipé d'un joint torique d'étanchéité ;
- la figure 2A est une vue à plus grande échelle du détail D à la figure 2 ;
- la figure 3 est une coupe analogue à la figure 2 en l'absence du joint d'étanchéité dans l'élément mâle du raccord et
- la figure 4 est une vue analogue à la figure 2A pour un raccord et un élément conformes à un second mode de réalisation de l'invention.

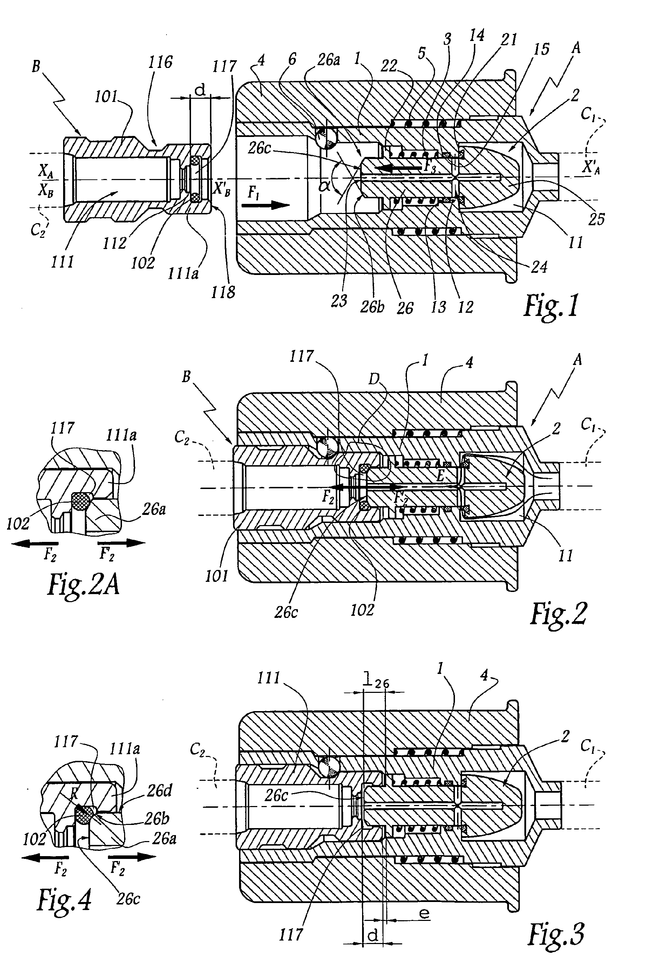

Le raccord représenté aux figures 1 à 3 comprend un élément ou embout femelle A et un élément ou about mâle B raccordés respectivement à une canalisation amont C₁ et à une canalisation aval C₂. La canalisation amont C₁ est, elle-même, raccordée à une source de fluide sous pression non représentée.

Dans le cas d'espèce, l'élément A appartient à une installation telle qu'une station service et est relié par la canalisation C₁, qui est souple, à un réservoir de gaz de pétrole liquéfié. L'about B est, quand à lui, monté sur un véhicule automobile et relié au réservoir de carburant de ce véhicule. Selon un aspect non représenté de l'invention, l'about B peut être équipé d'un clapet interne d'obturation.

Le corps 1 de l'élément femelle A est de forme globalement cylindrique et circulaire, centré sur un axe X_{A}-X'_{A} qui est également l'axe longitudinal d'un conduit 11 interne au corps 1 et dans lequel est disposé un clapet 2 mobile selon l'axe X_{A}-X'_{A}. Le clapet 2 est équipé d'un joint torique 21 destiné à venir en appui contre un épaulement interne 12 du corps 1, pour obturer le conduit 11. Le clapet 2 est pourvu d'une collerette radiale externe 22 sur laquelle un ressort 3 en appui contre un second épaulement 13 du corps 1 exerce un effort élastique F₃ de fermeture du clapet 2. Le clapet 2 est de forme externe cylindrique à base circulaire centré sur l'axe X_{A}-X'_{A}. Il est pourvu d'un perçage axial 23 et de plusieurs perçages radiaux 24, dont deux sont visibles sur les figures.

Le clapet 2 comprend une tête 25 disposée dans le conduit 11, en amont de l'épaulement 12. Il comporte également une tige 26 disposée en aval de l'épaulement 12 et dont on note 26a l'extrémité ou « tête » qui fait saillie par rapport à la collerette 22, à l'opposé de la tête 25.

Entre les épaulements 12 et 13, le corps 2 est pourvu d'une gorge 14 de réception d'un joint torique 15 contre lequel porte la tige 26.

Un manchon de manoeuvre 4 est disposé autour du corps 1 et chargé élastiquement par un ressort 5 vers une position où il exerce sur des billes 6 un effort centripète. Une seule bille est visible sur les figures. En pratique l'élément femelle comprend plusieurs billes réparties autour de l'axe X_{A}-X'_{A}. En variante, les billes peuvent être remplacées par des doigts ou des cliquets assurant, comme les billes 6, une fonction de verrouillage de l'about mâle dans la configuration emmanché représentée à la figure 2.

Le corps 101 de l'élément mâle B est de forme externe globalement cylindrique et circulaire centrée sur un axe X_{B}-X'_{B} qui est destiné à être confondu avec l'axe X_{A}-X'_{A} en configuration emmanché des éléments A et B. Le corps 101 définit un conduit 111 de circulation de gaz sous pression et est pourvu d'une gorge 116 de réception des billes 6 en vue du verrouillage des éléments A et B en configuration emmanchée.

Le corps 101 est également pourvu d'une gorge radiale interne 117 qui borde la partie d'extrémité 111a du conduit 111 la plus proche de son débouché et dans laquelle est disposée un joint torique 102. Ce joint 102 vise à assurer une isolation efficace entre l'ensemble constitué des conduits 11 et 111, d'une part, et l'atmosphère ambiante, d'autre part, lorsque les éléments A et B sont accouplés.

La gorge 117 est ménagée à l'intérieur du corps 101, de sorte que le joint 102 est relativement protégé des agressions mécaniques et chimiques venant de l'extérieur.

La gorge 117 jouxte un épaulement radiale interne 112 du corps 101 et l'on note d la distance entre cet épaulement 112 et la face avant 118 du corps 101.

La tête 26a de la tige 26 est pourvue d'un chanfrein périphérique externe 26b dont l'angle au sommet α a une valeur de l'ordre de 120°. En pratique, l'angle α peut avoir une valeur comprise entre 60 et 175°, de préférence entre 80 et 160°, de préférence encore de l'ordre de 120°.

Lorsqu'il convient d'emmancher les éléments A et B l'un dans l'autre, ceux-ci sont soumis à un mouvement de rapprochement représenté par les flèches F₁ à la figure 1, ce qui permet d'atteindre la configuration de la figure 2 où la tête 26a a pénétré dans l'extrémité 111a du conduit 111. Dans cette configuration, le chanfrein 26b porte contre le joint 102 et exerce sur celui-ci un effort axial F₂. Du fait de sa raideur, qui est supérieure à celle du ressort 3, le joint 102 exerce sur le chanfrein 26b un effort de réaction F'₂ qui permet de repousser le clapet 2 à l'encontre de l'effort F₃, le clapet 2 atteignant alors la position de la figure 2 où les canaux 24 et 23 permettent l'écoulement de gaz sous pression de la partie amont du conduit 11 vers le conduit 111, comme représenté par les flèches E.

La valeur de l'angle α influe sur la déformation du joint 102, son étanchéité et sa durabilité. Un angle α de l'ordre de 120° donne des résultats satisfaisants et permet de concilier un appui franc de la tête 26a sur le joint 102, sans dégradation de ce dernier, avec une ouverture franche du clapet 2.

En l'absence de joint 102 dans la gorge 117, et comme représenté à la figure 3, la face avant 26c de l'extrémité 26a ne porte pas contre l'épaulement 112, de telle sorte que le clapet 2 reste en position d'appui étanche contre l'épaulement 12 qui lui sert de siège.

Pour ce faire, la longueur l₂₆ de l'extrémité 26a est inférieure à la somme de la distance d et de l'écartement e entre la face avant 118 de l'élément B et la collerette 22, en configuration fermée du clapet.

Au vu de ce qui précède, on obtient un fonctionnement sécurisé du raccord formé des éléments A et B dans la mesure où le clapet 2 est efficacement déplacé par le joint 102 lors de l'emmanchement des éléments A et B alors que, en l'absence du joint 102, le clapet demeure en appui sur son siège 12, ce qui évite les risques de fuite et permet une détection efficace de l'absence de joint.

L'invention a été représentée lors de son utilisation dans une station service de remplissage de réservoirs de véhicules automobiles mais peut être employée dans d'autres domaines où des problèmes similaires sont susceptibles de se poser.

Dans l'exemple représenté, la tête ou extrémité 26a est monobloc avec la tête 25 et la tige 26 du clapet 2. En variante, cette tête peut être rapportée sur cette tige et fixée par tout moyen approprié, notamment par collage, vissage ou soudage.

La tête 26a peut ne pas être équipée d'un chanfrein tel que celui représenté sur les figures avec la référence 26b. Dans ce cas représenté à la figure 4, la zone de transition 26b entre sa face avant 26c et sa surface radiale externe 26d est de préférence arrondie, avec un rayon de courbure R supérieur à 0,3 mm évitant que le joint 102 ne soit marqué par la tête 26a. La zone de transition 26b est alors en portion de tore.

En outre, le diamètre de la tige 26 au voisinage des canaux 24, c'est à dire au voisinage de l'épaulement 12 et du joint 15, est avantageusement supérieur au diamètre de la tête ou extrémité 26a. Ainsi, la résultante de la pression du gaz dans le raccord accouplé a tendance à fermer le clapet 2. En pratique, le diamètre de la tige 26 peut être légèrement supérieur à celui de la tête 26a, par exemple de 0,2 mm.

## Revendications

1. Raccord rapide pour la jonction amovible de deux canalisations parcourues par un fluide sous pression, ledit raccord comprenant deux éléments mâle (B) et femelle (A) aptes à s'emmancher axialement l'un dans l'autre, l'élément mâle étant équipé d'un joint (102) disposé dans un logement interne (117) du corps (101) dudit élément mâle, alors que l'élément femelle est pourvu d'un clapet d'obturation (2), **caractérisé en ce que** ledit clapet (2) est commandé à l'ouverture par un effort de réaction (F'₂) exercé par ledit joint (102), ledit effort resultant de l'appui (F₂) dudit clapet sur ledit joint suite à l'emmanchement (F₁) desdits éléments mâle et femelle.

2. Raccord selon la revendication 1, **caractérisé en ce que**, en l'absence dudit joint (102) dans ledit logement (117), l'emmanchement (F₁) desdits éléments mâle et femelle n'induit pas le déplacement dudit clapet (2) dans un sens d'ouverture.

3. Elément femelle de raccord rapide **caractérisé en ce qu'**il appartient à un raccord selon l'une des revendications 1 ou 2.

4. Elément femelle de raccord rapide pourvu d'un clapet d'obturation, **caractérisé en ce que** ledit clapet (2) est commandé à l'ouverture par un effort de réaction (F'₂) exercé par un joint (102) disposé dans un logement interne (117) du corps (101) d'un élément mâle (B) de raccord apte à être emmanché dans ledit élément femelle (A), ledit effort résultant de l'appui (F₂) sur ledit joint d'un chanfrein (26b) périphérique et externe ou d'une zone de transition (26b) entre la face avant (26c) et une surface radiale externe (26d) dudit clapet, suite à l'emmanchement (F₁) desdits éléments mâle et femelle.

5. Elément femelle de raccord selon l'une des revendications 3 ou 4, **caractérisé en ce que** ledit clapet (2) est pourvu d'une partie (26a) apte à être engagée dans le volume intérieur (111a) du corps (101) d'un élément mâle (B) de raccord et à venir en appui (F₂) contre ledit joint (102) lors de l'emmanchement desdits éléments mâle (B) et femelle (A).

6. Elément femelle de raccord selon la revendication 5, **caractérisé en ce que** ladite partie (26a) est monobloc avec une partie principale (25,26) dudit clapet (2) apte à obturer un conduit interne (11) dudit élément femelle (A).

7. Elément femelle de raccord selon la revendication 5, **caractérisé en ce que** ladite partie (26a) est rapportée sur une partie principale (25,26) dudit clapet (2) apte à obturer un conduit interne (11) dudit élément femelle (A).

8. Elément femelle de raccord selon l'une des revendications 5 à 7, **caractérisé en ce que** ladite partie (26a) apte à être engagée dans le volume intérieur (111a) du corps (101) d'un élément mâle (B) de raccord est pourvue d'un chanfrein (26b) périphérique et externe d'appui contre un joint (102), ledit chanfrein étant convergent en direction opposée à une zone (12, 21) d'appui étanche dudit clapet (2) sur le corps (1) de l'élément femelle (A).

9. Elément femelle de raccord selon la revendication 8, **caractérisé en ce que** l'angle au sommet (α) dudit chanfrein (26b) a une valeur comprise entre 60 et 175°, de préférence entre 80 et 160°, de préférence encore de l'ordre de 120°.

10. Elément femelle de raccord selon l'une des revendications 3 à 7, **caractérisé en ce que** la zone de jonction (26b) entre la face avant (26c) et la surface radiale externe (26d) de ladite partie est conformée globalement en portion de tore.

11. Installation de remplissage de réservoirs de véhicules automobiles en gaz sous pression équipés chacun d'un élément de raccord mâle pourvu d'un joint disposé dans un logement ménagé sur une surface interne d'un corps dudit élément mâle, ladite installation étant elle-même équipée d'un élément de raccord femelle apte à recevoir en emmanchement l'un desdits éléments de raccord mâle et pourvu d'un clapet d'obturation, **caractérisée en ce que** ledit élément femelle (A) est selon l'une des revendication 3 à 10.

## Claims

1. Quick-acting coupling for removable connection of two conduits through which a fluid under pressure passes, said coupling comprising two elements, male (B) and female (A), which are able to be fitted axially one into the other, the male element being equipped with a gasket (102) which is disposed in an internal housing (117) of the body (101) of said male element, whilst the female element is provided with a sealing valve (2), **characterised in that** said valve (2) is controlled in opening by a reaction force (F'₂) exerted by said gasket (102), said force resulting from the abutment (F₂) of said valve on said gasket following the fitting together (F₁) of said male and female elements.

2. Coupling according to claim 1, **characterised in that**, in the absence of said gasket (102) in said housing (117), the fitting together (F₁) of said male and female elements does not effect displacement of said valve (2) in an opening direction.

3. Female quick-acting coupling element, **characterised in that** it is part of a coupling according to one of the claims 1 or 2.

4. Female quick-acting coupling element provided with a sealing valve, **characterised in that** said valve (2) is controlled in opening by a reaction force (F'₂) exerted by a gasket (102) which is disposed in an internal housing (117) of the body (101) of a male coupling element (B) which is able to be fitted into said female element (A), said force resulting from the abutment (F₂) on said gasket of a peripheral, external chamfer (26b) or of a transition zone (26b) between the front face (26c) and a radial, external surface (26d) of said valve, following the fitting together (F₁) of said male and female elements.

5. Female coupling element according to one of the claims 3 or 4, **characterised in that** said valve (2) is provided with a part (26a) which is able to be engaged in the interior volume (111a) of the body (101) of a male coupling element (B) and to abut (F₂) against said gasket (102) during fitting together of said male (B) and female (A) elements.

6. Female coupling element according to claim 5, **characterised in that** said part (26a) is integral with a main part (25, 26) of said valve (2) which is able to seal an internal channel (11) of said female element (A).

7. Female coupling element according to claim 5, **characterised in that** said part (26a) is connected to a main part (25, 26) of said valve (2) which is able to seal an internal channel (11) of said female element (A).

8. Female coupling element according to one of the claims 5 to 7, **characterised in that** said part (26a) which is able to be engaged in the interior volume (111a) of the body (101) of a male coupling element (B) is provided with a peripheral, external chamfer (26b) for abutment against a gasket (102), said chamfer being convergent in a direction opposite to a sealed abutment zone (12, 21) of said valve (2) on the body (1) of the female element (A).

9. Female coupling element according to claim 8, **characterised in that** the angle at the vertex (α) of said chamfer (26b) has a value between 60 and 175°, preferably between 80 and 160°, more preferably of the order of 120°.

10. Female coupling element according to one of the claims 3 to 7, **characterised in that** the connection zone (26b) between the front face (26c) and the radial external surface (26d) of said part conforms overall to a toroidal portion.

11. Installation for filling automotive vehicle tanks with gas under pressure, each equipped with a male coupling element provided with a gasket which is disposed in a housing provided on an internal surface of a body of said male element, said installation being itself equipped with a female coupling element which is able to receive, by fitting together, one of said male coupling elements and is provided with a sealing valve, **characterised in that** said female element (A) is according to one of the claims 3 to 10.

## Patentansprüche

1. Schnellkupplung für die lösbare Verbindung von zwei von einem unter Druck stehenden Fluid durchströmten Leitungen, wobei die Kupplung ein Einsteckelement (B) und ein Aufnahmeelement (A) umfasst, die geeignet sind, axial ineinander gesteckt zu werden, wobei das Einsteckelement mit einer Dichtung (102) ausgerüstet ist, die in einem Innenaufnahmeraum (117) des Körpers (101) des Einsteckelementes angeordnet ist, während das Aufnahmeelement mit einem Verschlussventil (2) versehen ist, **dadurch gekennzeichnet, dass** das Ventil (2) durch eine von der Dichtung (102) ausgeübten Reaktionskraft (F'₂) offengesteuert wird, wobei die Kraft aus dem Abstützen des Ventils an der Dichtung in Folge des Ineinandergreifens (F₁) des Einsteckelementes und des Aufnahmeelementes resultiert.

2. Schnellkupplung nach Anspruch 1, **dadurch gekennzeichnet, dass** bei Nichtvorhandensein der Dichtung (102) in dem Aufnahmeraum (117) das Ineinandergreifen (F₁) des Einsteckelementes und des Aufnahmeelementes keine Verschiebung des Ventils (2) in eine Öffnungsrichtung induziert.

3. Schnellkupplungs-Aufnahmeelement **dadurch gekennzeichnet, dass** es zu einer Kupplung nach einem der Ansprüche 1 oder 2 gehört.

4. Schnellkupplungs-Aufnahmeelement mit einem Verschlussventil, **dadurch gekennzeichnet, dass** das Ventil (2) durch eine von einer Dichtung (102) ausgeübten Reaktionskraft (F'₂) offengesteuert wird, wobei die Dichtung (102) in einem Innenaufnahmeraum (117) des Körpers (101) eines Kupplungseinsteckelementes (B) angeordnet ist, das geeignet ist, in das Aufnahmeelement (A) eingesteckt zu werden, wobei die Kraft aus dem Abstützen (F₂) einer Außenumfangsschräge (26b) oder einer Übergangszone (26b) zwischen der Stirnfläche (26c) und einer radialen Außenfläche (26d) des Ventils in Folge des Ineinandergreifens (F₁) des Einsteckelementes und des Aufnahmeelementes resultiert.

5. Kupplungs-Aufnahmeelement nach Anspruch 3 oder 4, **dadurch gekennzeichnet, dass** das Ventil (2) mit einem Bereich (26a) versehen ist, der geeignet ist, in das Innenvolumen (111a) des Körpers (101) eines Kupplungseinsteckelementes (B) einzugreifen und in Abstützung (F₂) gegen die Dichtung (102) bei dem Ineinandergreifen des Einsteckelementes (B) und des Aufnahmeelementes (A) zu kommen.

6. Kupplungs-Aufnahmeelement nach Anspruch 5, **dadurch gekennzeichnet, dass** der Bereich (26a) einstückig mit einem Hauptteil (25, 26) des Ventils (2) ausgebildet ist, das geeignet ist, einen Innenkanal (11) des Aufnahmeelementes (A) zu verschließen.

7. Kupplungs-Aufnahmeelement nach Anspruch 5, **dadurch gekennzeichnet, dass** der Bereich (26a) an ein Hauptteil (25, 26) des Ventils (2) angesetzt ist, das geeignet ist, einen Innenkanal (11) des Aufnahmeelementes (A) zu verschließen.

8. Kupplungs-Aufnahmeelement nach einem der Ansprüche 5 bis 7, **dadurch gekennzeichnet, dass** der Bereich (26a), der geeignet ist, in das Innenvolumen (111a) des Körpers (101) eines Kupplungseinsteckelementes (B) einzugreifen, mit einer Außenumfangschräge (26b) zum Abstützen gegen eine Dichtung (102) versehen ist, wobei die Schräge in Richtung entgegengesetzt zu einer Zone (12, 21) der dichten Abstützung des Ventils (2) an dem Körper (1) des Aufnahmeelementes (A) konvergiert.

9. Kupplungs-Aufnahmeelement nach Anspruch 8, **dadurch gekennzeichnet, dass** der Spitzenwinkel (α) der Schräge (26b) einen Wert zwischen 60° und 175°, vorzugsweise zwischen 80° und 160°, noch bevorzugter in der Größenordnung von 120° aufweist.

10. Kupplungs-Aufnahmeelement nach einem der Ansprüche 3 bis 7, **dadurch gekennzeichnet, dass** die Verbindungszone (26b) zwischen der Stirnfläche (26c) und der radialen Außenfläche (26d) des Bereichs im Wesentlichen als Torusbestandteil geformt ist.

11. Anlage zur Füllung von Kraftfahrzeugtanks mit unter Druck stehendem Gas, die jeweils mit einem Kupplungseinsteckelement ausgerüstet sind, das mit einer Dichtung versehen ist, die in einer auf der Innenfläche eines Körpers des Einsteckelementes eingearbeiteten Aufnahme angeordnet ist, wobei die Anlage selbst mit einem Kupplungsaufnahmeelement versehen ist, das geeignet ist, durch Ineinandergreifen eines der Kupplungseinsteckelemente aufzunehmen und mit einem Verschlussventil versehen ist, **dadurch gekennzeichnet, dass** das Aufnahmeelement (A) nach einem der Ansprüche 3 bis 10 ausgebildet ist.
